# EUROPÄISCHE PATENTANMELDUNG

(11) **EP 4 620 552 A1**
(43) Veröffentlichungstag der Anmeldung: **24.09.2025**
(21) Anmeldenummer: 25161851.8
(22) Anmeldetag: 05.03.2025
(51) Int. Cl.: B01D 29/11, B01D 35/30

(54) **FILTERELEMENT, IONENTAUSCHER-FILTERELEMENT UND FILTERSYSTEM**

(30) Priorität: 18.03.2024 DE 102024107682
(71) Anmelder: MANN+HUMMEL GmbH, 71636 Ludwigsburg (DE)
(72) Erfinder: MACK, Klaus, 71636 Ludwigsburg (DE); BAUCH, Maximilian, 71636 Ludwigsburg (DE); EBLE, Jonas, 71636 Ludwigsburg (DE); JOKSCHAS, Günter, 71636 Ludwigsburg (DE); TRAUTMANN, Pius, 71636 Ludwigsburg (DE); WEIDINGER, Sven, 71636 Ludwigsburg (DE)
(74) Vertreter: Mann + Hummel Intellectual Property

(57) **Zusammenfassung**

Die Erfindung betrifft ein Filterelement (10) für ein Fluid, insbesondere für eine Flüssigkeit, insbesondere Öl oder Kraftstoff oder Kühlmittel, zum Einbau in ein Gehäuse (110) eines Filtersystems (100) mit wenigstens einem ersten Gehäuseteil (112) und einem zweiten Gehäuseteil (114), wenigstens umfassend einen Filtermediumkörper (12), welcher wenigstens an einer ersten Stirnseite (16) eine erste Endscheibe (20) aufweist, und eine Verbindungsvorrichtung (30) zum Fixieren des Filterelements (10) in dem Gehäuse (110) sowie zum Verschließen des Gehäuses (110). Die Verbindungsvorrichtung (30) weist wenigstens ein erstes Verbindungselement (32) zum Zusammenwirken mit dem ersten Gehäuseteil (112) und wenigstens ein zweites Verbindungselement (34) zum Zusammenwirken mit dem zweiten Gehäuseteil (114) auf. Dabei ist das erste und zweite Verbindungselement (32, 34) an einem umlaufenden Randelement (40) angeordnet, welches mit der ersten Endscheibe (20) verbunden ist und welches von der ersten Endscheibe (20) axial beabstandet ist.

Die Erfindung betrifft ferner ein Ionentauscher-Filterelement sowie ein Filtersystem (100).

## Beschreibung

### Technisches Gebiet

Die Erfindung betrifft ein Filterelement für ein Fluid, insbesondere für eine Flüssigkeit, insbesondere Öl oder Kraftstoff oder Kühlmittel, sowie ein Ionentauscher-Filterelement und ein Filtersystem für ein Fluid, insbesondere für eine Flüssigkeit, insbesondere Öl oder Kraftstoff oder Kühlmittel.

### Stand der Technik

Filterelemente mit Adapterringen mit Innen- und/oder Außengewinden zum Montieren in einem Filtergehäuse und/oder einem Gehäusedeckel sind bekannt.

US 2016/0097474 A1 offenbart beispielsweise eine Fluidverbindungsbaugruppe, welche ein äußeres Befestigungselement und ein inneres Befestigungselement umfasst. Das äußere Befestigungselement besteht aus einer Oberseite, einer Unterseite und einer Vielzahl von radial verlaufenden Elementen auf der Oberseite. Das innere Befestigungselement weist eine Oberseite, eine Unterseite und eine Vielzahl von radial verlaufenden Vorsprüngen auf. Die radial verlaufenden Vorsprünge sind so dimensioniert, dass sie von den radial verlaufenden Elementen aufgenommen werden, wenn das innere Befestigungselement mit dem äußeren Befestigungselement montiert wird. Ein Verbinder ist in dem inneren Befestigungselement angeordnet. Der Verbinder ist mit einem Außengewinde versehen, so dass er eine Fluidzufuhrleitung mit Innengewinde aufnimmt.

Weiter sind Filterelemente bekannt mit integrierten Gewinden zum Montieren in einem Filtergehäuse und/oder einem Gehäusedeckel bekannt.

In WO 2008/ 015100 A1 ist beispielsweise ein Filterelement mit einem Filterbalg beschrieben, der endseitig jeweils mit einer Endscheibe abgedeckt ist. Die Endscheiben sind jeweils mit wenigstens einem Kopplungselement zur Koppelung mit einem Filtergehäuse versehen und über wenigstens ein den Filterbalg überspannendes Mittelrohr miteinander verbunden. Alternativ ist ein durchgängiges Mittelrohr vorhanden, auf das Endscheiben und Filterbalg aufgeschoben sind und das an seinen endseitigen Absätzen zur Kopplung mit Gehäuseteilen ausgebildet ist.

### Offenbarung der Erfindung

Eine Aufgabe der Erfindung ist es, ein einfach zu montierendes Filterelement für ein Fluid, insbesondere für eine Flüssigkeit, insbesondere Öl oder Kraftstoff oder Kühlmittel, zu schaffen.

Eine weitere Aufgabe der Erfindung ist es, ein Ionentauscher-Filterelement mit einem solchen Filterelement zu schaffen.

Eine weitere Aufgabe der Erfindung ist es, ein Filtersystem für ein Fluid, insbesondere für eine Flüssigkeit, insbesondere Öl oder Kraftstoff oder Kühlmittel, mit einem solchen Filterelement zu schaffen.

Die vorgenannte Aufgabe wird nach einem Aspekt der Erfindung gelöst mit einem Filterelement für ein Fluid, insbesondere für eine Flüssigkeit, insbesondere Öl oder Kraftstoff oder Kühlmittel, zum Einbau in ein Gehäuse eines Filtersystems mit wenigstens einem ersten Gehäuseteil und einem zweiten Gehäuseteil, wenigstens umfassend einen Filtermediumkörper, welcher wenigstens an einer ersten Stirnseite eine erste Endscheibe aufweist, und eine Verbindungsvorrichtung zum Fixieren des Filterelements in dem Gehäuse sowie zum Verschließen des Gehäuses, wobei die Verbindungsvorrichtung wenigstens ein erstes Verbindungselement zum Zusammenwirken mit dem ersten Gehäuseteil und wenigstens ein zweites Verbindungselement zum Zusammenwirken mit dem zweiten Gehäuseteil aufweist, wobei das erste und zweite Verbindungselement an einem umlaufenden Randelement angeordnet sind, welches mit der ersten Endscheibe verbunden ist und welches von der ersten Endscheibe axial beabstandet ist.

Die weitere Aufgabe wird nach einem weiteren Aspekt der Erfindung gelöst mit einem Ionentauscher-Filterelement mit einem Filterelement, wobei ein Filtermediumkörper des Filterelements als Ionentauscher ausgebildet ist.

Die weitere Aufgabe wird nach einem weiteren Aspekt der Erfindung gelöst mit einem Filtersystem für ein Fluid, insbesondere für eine Flüssigkeit, insbesondere Öl oder Kraftstoff oder Kühlmittel, mit einem Gehäuse mit einem ersten Fluidanschluss und einem zweiten Fluidanschluss und einem in dem Gehäuse angeordneten Filterelement, wobei das Gehäuse wenigstens ein erstes Gehäuseteil und ein zweites Gehäuseteil umfasst, welche in Richtung einer Längsachse aufeinander folgen und miteinander verbunden sind, wobei das Filterelement einen Filtermediumkörper, welcher wenigstens an einer ersten Stirnseite eine erste Endscheibe aufweist, und eine Verbindungsvorrichtung zum Fixieren des Filterelements in dem Gehäuse sowie zum Verschließen des Gehäuses umfasst, wobei die Verbindungsvorrichtung wenigstens ein erstes Verbindungselement und wenigstens ein zweites Verbindungselement aufweist, wobei bei bestimmungsgemäßer Anordnung des Filterelements in dem Gehäuse das erste Verbindungselement mit dem ersten Gehäuseteil und das zweite Verbindungselement mit dem zweiten Gehäuseteil verbunden ist.

Günstige Ausgestaltungen und Vorteile der Erfindung ergeben sich aus den weiteren Ansprüchen, der Beschreibung und der Zeichnung.

Nach einem Aspekt der Erfindung wird ein Filterelement für ein Fluid, insbesondere für eine Flüssigkeit, insbesondere Öl oder Kraftstoff oder Kühlmittel, vorgeschlagen, zum Einbau in ein Gehäuse eines Filtersystems mit wenigstens einem ersten Gehäuseteil und einem zweiten Gehäuseteil, wenigstens umfassend einen Filtermediumkörper, welcher wenigstens an einer ersten Stirnseite eine erste Endscheibe aufweist, und eine Verbindungsvorrichtung zum Fixieren des Filterelements in dem Gehäuse sowie zum Verschließen des Gehäuses. Die Verbindungsvorrichtung weist wenigstens ein erstes Verbindungselement zum Zusammenwirken mit dem ersten Gehäuseteil und wenigstens ein zweites Verbindungselement zum Zusammenwirken mit dem zweiten Gehäuseteil auf. Dabei ist das erste und zweite Verbindungselement an einem umlaufenden Randelement angeordnet, welches mit der ersten Endscheibe verbunden ist und welches von der ersten Endscheibe axial beabstandet ist.

Das vorgeschlagene Filterelement weist eine Verbindungsvorrichtung mit ersten und zweiten Verbindungselementen zum Verbinden des Filterelements mit den beiden Gehäuseteilen auf. Dabei ist die Verbindungsvorrichtung mit der Endscheibe des Filterelements verbunden. Die ersten und zweiten Verbindungselemente können beispielsweise eine Kombination von Innengewinde und Außengewinde sein. Innengewinde und Außengewinde können unterschiedliche Steigungen und/oder Durchmesser aufweisen. Die ersten und zweiten Verbindungselemente können beispielsweise auch eine Kombination einer Bajonettverbindung mit einem Innengewinde oder Außengewinde sein.

Die mit der Endscheibe des Filterelements verbundene Verbindungsvorrichtung dient so dazu, mit den ersten und zweiten Verbindungselementen das erste Gehäuseteil mit dem zweiten Gehäuseteil zu verbinden. So kann das erste Gehäuseteil nur mittels eines passenden Filterelements mit dem zweiten Gehäuseteil verbunden werden, da die Verbindungselemente des ersten und des zweiten Gehäuseteils nicht miteinander kompatibel sind. Das Filterelement weist Verbindungselemente für beide Seiten auf, so dass das erste Gehäuseteil indirekt mit dem zweiten Gehäuseteil verbunden werden kann.

Die Verbindungsvorrichtung mit den ersten und zweiten Verbindungselementen kann mit der Endscheibe des Filterelements einstückig ausgebildet sein. Alternativ ist auch möglich, dass die Verbindungsvorrichtung lösbar mit der Endscheibe verbunden ist, beispielsweise über eine Rastverbindung.

Gemäß einer günstigen Ausgestaltung des Filterelements kann die erste Endscheibe wenigstens eine Fluidöffnung in Längsrichtung zum Durchströmen des Fluids aufweisen. Die wenigstens eine Fluidöffnung kann vorteilhaft in einem Bereich radial zwischen den ersten und beiden Verbindungselementen und dem Filtermediumkörper angeordnet sein, so dass das Filterelement in Filtergehäusen eingesetzt werden kann, bei denen der Fluideinlass und der Fluidauslass in Längsrichtung auf derselben Seite angeordnet sind.

Gemäß einer günstigen Ausgestaltung des Filterelements kann die wenigstens eine Fluidöffnung radial außen an der Endscheibe angeordnet sein. Insbesondere kann dabei die wenigstens eine Fluidöffnung benachbart zu dem Randelement angeordnet sein. Weiter kann insbesondere die wenigstens eine Fluidöffnung durch das Randelement nach außen abgeschlossen sein. Vorteilhaft kann so das Filterelement in Filtergehäusen eingesetzt werden, bei denen der Fluideinlass und der Fluidauslass in Längsrichtung auf derselben Seite angeordnet sind.

Gemäß einer günstigen Ausgestaltung des Filterelements kann das erste Verbindungselement ein erstes Gewinde und das zweite Verbindungselement ein zweites Gewinde aufweisen, welche zum Zusammenwirken mit einem ersten Gegengewinde des ersten Gehäuseteils und einem zweiten Gegengewinde des zweiten Gehäuseteils ausgebildet sind. Dadurch ist eine sichere Verbindung zwischen dem Filterelement und dem ersten Gehäuseteil einerseits und dem zweiten Gehäuseteil andererseits möglich.

Gemäß einer günstigen Ausgestaltung des Filterelements kann das eine der beiden Gewinde als Innengewinde und das andere der beiden Gewinde als Außengewinde ausgebildet sein. Alternativ können das erste und das zweite Gewinde als Außengewinde ausgebildet sein. Mit diesen Alternativen kann eine sichere Verbindung zwischen dem Filterelement und dem ersten Gehäuseteil einerseits und dem zweiten Gehäuseteil andererseits erreicht werden.

Gemäß einer günstigen Ausgestaltung des Filterelements können die beiden Gewinde jeweils wenigstens eine in Längsrichtung verlaufende Aussparung aufweisen.

Gemäß einer günstigen Ausgestaltung des Filterelements kann das Randelement den Filtermediumkörper wenigstens bereichsweise umgeben. Insbesondere können dabei das erste und/oder das zweite Gewinde in Richtung der Längsachse einen Teil des Filtermediumkörpers umgeben. Auf diese Weise kann eine kompakte Bauform des Filtersystems erreicht werden, in dem das Filterelement eingesetzt ist.

Gemäß einer günstigen Ausgestaltung des Filterelements kann das Randelement einen in Längsrichtung von dem Filtermediumkörper weg weisenden Bund aufweisen. Der Bund kann vorteilhaft zur Aufnahme wenigstens eines der beiden Verbindungselemente der Verbindungsvorrichtung dienen.

Gemäß einer günstigen Ausgestaltung des Filterelements kann das Randelement einen radial nach außen weisenden umlaufenden Vorsprung aufweisen, wobei das erste Verbindungselement und das zweite Verbindungselement in Längsrichtung beidseits des Vorsprungs angeordnet sind. Mittels des Vorsprungs können die beiden Gehäuseteile gegeneinander und gegen das Filterelement wirksam abgedichtet werden.

Gemäß einer günstigen Ausgestaltung des Filterelements kann das Randelement mit der wenigstens einen Endscheibe über eine lösbare Verbindung, insbesondere mit wenigstens einem Rastelement, verbunden sein. Vorteilhaft ist so ein modularer Aufbau des Filterelements möglich, welcher eine Fertigung und Montage des Filterelements erleichtert.

Gemäß einer günstigen Ausgestaltung des Filterelements kann das Randelement mit der wenigstens einen Endscheibe einstückig ausgebildet sein. Dadurch ist ein kompakter und kostengünstiger Aufbau des Filterelements mit einer in die Endscheibe integrierten Verbindungsvorrichtung möglich.

Nach einem weiteren Aspekt der Erfindung wird ein Ionentauscher-Filterelement mit einem Filterelement vorgeschlagen, wobei ein Filtermediumkörper des Filterelements als Ionentauscher ausgebildet ist.

Vorteilhaft kann so ein Ionentauscher-Filtersystem aufgebaut werden, bei dem die mit der Endscheibe des Filterelements verbundene Verbindungsvorrichtung dazu dient, mit den ersten und zweiten Verbindungselementen das erste Gehäuseteil des Ionentauscher-Filters mit dem zweiten Gehäuseteil zu verbinden. So kann das erste Gehäuseteil nur mittels eines passenden Filterelements mit dem zweiten Gehäuseteil verbunden werden, da die Verbindungselemente des ersten und des zweiten Gehäuseteils nicht miteinander kompatibel sind. Das Filterelement weist Verbindungselemente für beide Seiten auf, so dass das erste Gehäuseteil indirekt mit dem zweiten Gehäuseteil verbunden werden kann.

Nach einem weiteren Aspekt der Erfindung wird ein Filtersystem für ein Fluid, insbesondere für eine Flüssigkeit, insbesondere Öl oder Kraftstoff oder Kühlmittel, vorgeschlagen, mit einem Gehäuse mit einem ersten Fluidanschluss und einem zweiten Fluidanschluss und einem in dem Gehäuse angeordneten Filterelement. Das Gehäuse umfasst wenigstens ein erstes Gehäuseteil und ein zweites Gehäuseteil, welche in Richtung einer Längsachse aufeinander folgen und miteinander verbunden sind. Das Filterelement umfasst einen Filtermediumkörper, welcher wenigstens an einer ersten Stirnseite eine erste Endscheibe aufweist, und eine Verbindungsvorrichtung zum Fixieren des Filterelements in dem Gehäuse sowie zum Verschließen des Gehäuses. Die Verbindungsvorrichtung weist wenigstens ein erstes Verbindungselement und wenigstens ein zweites Verbindungselement auf. Dabei ist bei bestimmungsgemäßer Anordnung des Filterelements in dem Gehäuse das erste Verbindungselement mit dem ersten Gehäuseteil und das zweite Verbindungselement mit dem zweiten Gehäuseteil verbunden.

Das vorgeschlagene Filtersystem weist ein Filterelement mit einer Verbindungsvorrichtung mit ersten und zweiten Verbindungselementen zum Verbinden des Filterelements mit den beiden Gehäuseteilen auf. Dabei ist die Verbindungsvorrichtung mit der Endscheibe des Filterelements verbunden. Die ersten und zweiten Verbindungselemente können beispielsweise eine Kombination von Innengewinde und Außengewinde sein. Innengewinde und Außengewinde können unterschiedliche Steigungen und/oder Durchmesser aufweisen. Die ersten und zweiten Verbindungselemente können beispielsweise auch eine Kombination einer Bajonettverbindung mit einem Innengewinde oder Außengewinde sein.

Die mit der Endscheibe des Filterelements verbundene Verbindungsvorrichtung dient so dazu, mit den ersten und zweiten Verbindungselementen das erste Gehäuseteil mit dem zweiten Gehäuseteil zu verbinden. So kann das erste Gehäuseteil nur mittels eines passenden Filterelements mit dem zweiten Gehäuseteil verbunden werden, da die Verbindungselemente des ersten und des zweiten Gehäuseteils nicht miteinander kompatibel sind. Das Filterelement weist Verbindungselemente für beide Seiten auf, so dass das erste Gehäuseteil indirekt mit dem zweiten Gehäuseteil verbunden werden kann.

Gemäß einer günstigen Ausgestaltung des Filtersystems kann das erste Verbindungselement ein erstes Gewinde und das zweite Verbindungselement ein zweites Gewinde aufweisen, wobei das erste Gehäuseteil ein erstes Gegengewinde und das zweite Gehäuseteil ein zweites Gegengewinde aufweisen kann. Dabei ist bei bestimmungsgemäßer Anordnung des Filterelements in dem Gehäuse das erste Gewinde mit dem ersten Gegengewinde und das zweite Gewinde mit dem zweiten Gegengewinde verbunden. Dadurch ist eine sichere Verbindung zwischen dem Filterelement und dem ersten Gehäuseteil einerseits und dem zweiten Gehäuseteil andererseits möglich.

Gemäß einer günstigen Ausgestaltung des Filtersystems kann zwischen der Verbindungsvorrichtung und dem ersten Gehäuseteil und/oder dem zweiten Gehäuseteil wenigstens ein axial und/oder radial dichtendes Dichtelement angeordnet sein. Auf diese Weise kann eine sichere Abdichtung des Gehäuses zur Umgebung sowie zwischen Rohfluidbereich und Reinfluidbereich des Filtersystems erreicht werden.

Gemäß einer günstigen Ausgestaltung des Filtersystems kann zwischen der Verbindungsvorrichtung und dem ersten Gehäuseteil und dem zweiten Gehäuseteil wenigstens ein axial und/oder radial dichtendes Dichtelement angeordnet sein, wobei das wenigstens eine Dichtelement die Abdichtung des ersten Gehäuseteiles gegen das zweite Gehäuseteil und gegen die Verbindungsvorrichtung ausbildet. In wenigstens einer Dichtelementaufnahme können so mit nur wenigstens einem Dichtelement alle drei Bauteile zueinander abgedichtet werden. Bevorzugt dichtet das wenigstens eine Dichtelement die Innenseite des Filtersystems gegenüber der Umgebung ab. Das wenigstens eine Dichtelement kann als Formdichtung, beispielsweise in Form eines Halbmondes, oder eine vom Schlauch gestochene Dichtung ausgebildet sein. Das wenigstens eine Dichtelement kann axial und/oder radial dichten.

In einer alternativen Ausgestaltung des Filterelemente sind das erste und zweite Verbindungselement an einem umlaufenden Randelement angeordnet, welches mit der zweiten Endscheibe verbunden ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine isometrische Darstellung eines Filtersystems für ein Fluid, insbesondere für eine Flüssigkeit, insbesondere Öl oder Kraftstoff oder Kühlmittel, mit einem Filterelement nach einem Ausführungsbeispiel der Erfindung;
- Figur 2: einen Längsschnitt durch das Filtersystem nach Fig. 1;
- Figur 3: eine isometrische Darstellung eines Filterelements des Filtersystems nach Fig. 1;
- Figur 4: eine Draufsicht auf das Filterelement nach Fig. 3;
- Figur 5: einen Längsschnitt durch das Filterelement nach Fig. 3;
- Figur 6: einen Längsschnitt durch ein Filtersystem nach einem weiteren Ausführungsbeispiel der Erfindung;
- Figur 7: eine isometrische Darstellung eines Filterelements des Filtersystems nach Fig. 6;
- Figur 8: eine Draufsicht auf das Filterelement nach Fig. 7;
- Figur 9: einen Längsschnitt durch das Filterelement nach Fig. 7;
- Figur 10: einen Längsschnitt durch ein Filtersystem nach einem weiteren Ausführungsbeispiel der Erfindung;
- Figur 11: eine isometrische Darstellung eines Filterelements des Filtersystems nach Fig. 10;
- Figur 12: eine Draufsicht auf das Filterelement nach Fig. 11**;**
- Figur 13: einen Längsschnitt durch das Filterelement nach Fig. 11;
- Figur 14: einen Längsschnitt durch ein Filtersystem nach einem weiteren Ausführungsbeispiel der Erfindung;
- Figur 15: eine isometrische Darstellung eines Filterelements des Filtersystems nach Fig. 14;
- Figur 16: eine Draufsicht auf das Filterelement nach Fig. 15;
- Figur 17: einen Längsschnitt durch das Filterelement nach Fig. 15;
- Figur 18: eine Explosionsdarstellung eines Filtersystems nach einem weiteren Ausführungsbeispiel der Erfindung in isometrischer Darstellung;
- Figur 19: eine Explosionsdarstellung des Filtersystems nach Fig. 18 im Längsschnitt;
- Figur 20: einen Längsschnitt durch das Filtersystem nach Fig. 18; und
- Figur 21: eine isometrische Darstellung eines Filterelements des Filtersystems nach Fig. 18.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

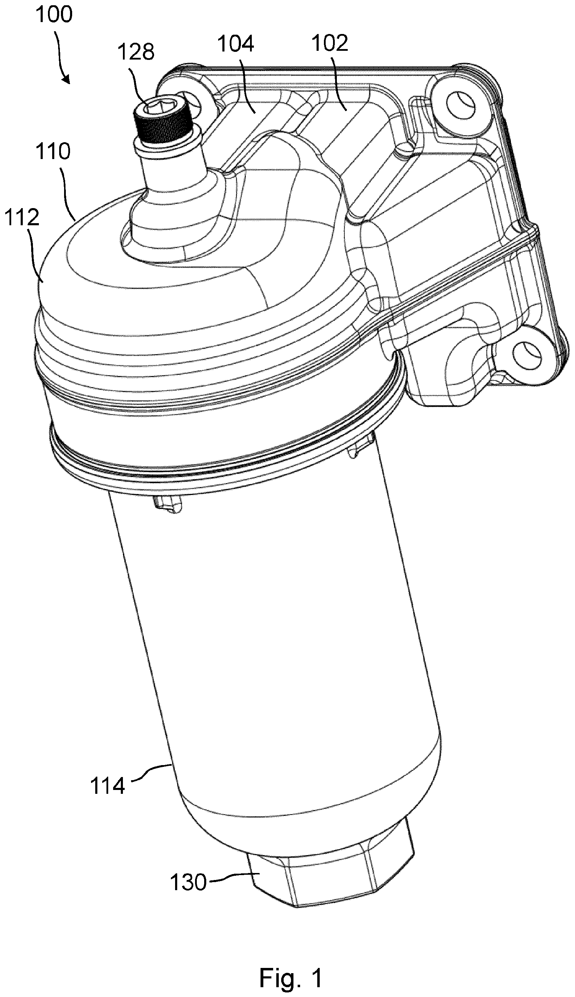

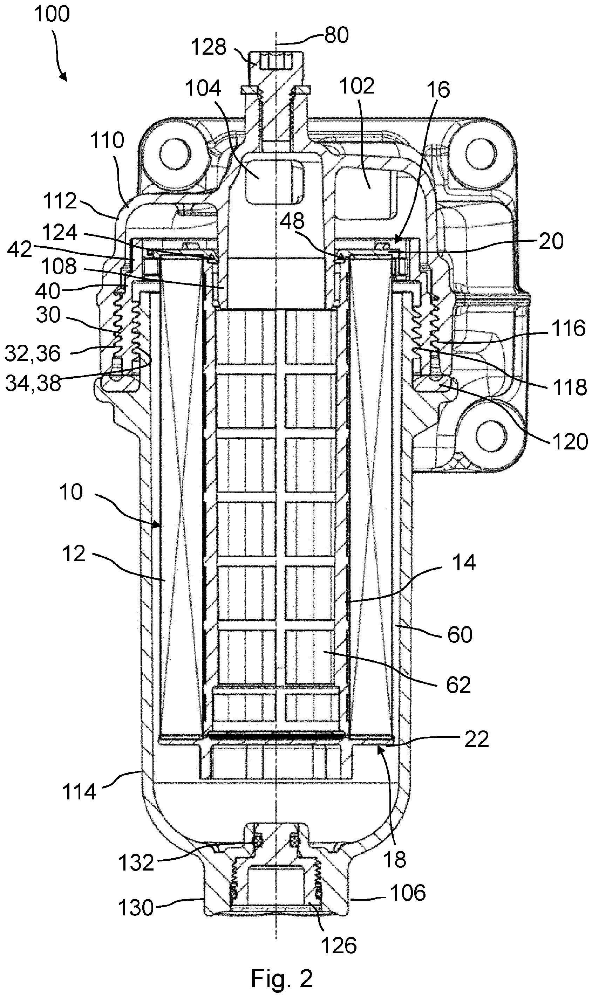

Zur Erläuterung der Erfindung zeigt Figur 1 eine isometrische Darstellung eines Filtersystems 100 für ein Fluid, insbesondere für eine Flüssigkeit, insbesondere Öl oder Kraftstoff oder Kühlmittel, mit einem Filterelement 10 nach einem Ausführungsbeispiel der Erfindung. In Figur 2 ist ein Längsschnitt durch das Filtersystem 100 dargestellt.

Das Filtersystem 100 umfasst ein Gehäuse 110 mit einem ersten Fluidanschluss 102 und einem zweiten Fluidanschluss 104 und einem in dem Gehäuse 110 angeordneten Filterelement 10. Das Gehäuse 110 umfasst ein erstes Gehäuseteil 112 und ein zweites Gehäuseteil 114, welche in Richtung einer Längsachse 80 aufeinander folgen und mit-einander verbunden sind. Erster Fluidanschluss 102 und zweiter Fluidanschluss 104 sind bei dem dargestellten Ausführungsbeispiel beide am ersten Gehäuseteil 112 angeordnet. Der erste Fluidanschluss 102 stellt dabei den Fluideinlass und der zweite Fluidanschluss 104 den Fluidauslass dar.

Das erste Gehäuseteil 112 weist in Längsrichtung 80 oben eine Entlüftungsschraube 128 auf. Das zweite Gehäuseteil 114 weist eine Fluidablassbohrung 106 auf, welche im bestimmungsgemäßen Betrieb mit einem Verschlusselement 126 und einem Dichtelement 132, beispielsweise einem O-Ring, dicht verschlossen ist. Die Fluidablassbohrung 106 ist auf der Außenseite des zweiten Gehäuseteils 114 als Werkzeugansatz 130 beispielsweise als Sechskant ausgebildet. So kann ein fest sitzendes zweites Gehäuseteil 114 durch Drehen mit einem geeigneten Werkzeug von der Verbindungsvorrichtung 30 und damit vom ersten Gehäuseteil 112 gelöst werden.

Im Inneren des Gehäuses 110 ist das Filterelement 10 angeordnet, welches einen Filtermediumkörper 12 umfasst, welcher an einer ersten Stirnseite 16 mit eine ersten Endscheibe 20 und an einer zweiten Stirnseite 18 mit einer zweiten Endscheibe 22 abgeschlossen ist. Im Inneren des Filtermediumkörpers 12 ist zur Versteifung ein Stützrohr 14 angeordnet. Die erste Endscheibe 20 weist eine zentrale Öffnung 48 zum Anschluss eines Auslassstutzens 108 des ersten Gehäuseteils 112 auf.

Das erste und zweite Gehäuseteil 112, 114 sind über das Filterelement 10 miteinander dicht verbunden. Dazu weist das Filterelement 10 eine Verbindungsvorrichtung 30 zum Fixieren des Filterelements 10 in dem Gehäuse 110 sowie zum Verschließen des Gehäuses 110 auf.

Die Verbindungsvorrichtung 30 weist ein erstes Verbindungselement 32 und ein zweites Verbindungselement 34 auf. Dabei ist bei bestimmungsgemäßer Anordnung des Filterelements 10 in dem Gehäuse 110 das erste Verbindungselement 32 mit dem ersten Gehäuseteil 112 und das zweite Verbindungselement 34 mit dem zweiten Gehäuseteil 114 verbunden.

Bei dem dargestellten Ausführungsbeispiel weist das erste Verbindungselement 32 ein erstes Gewinde 36 und das zweite Verbindungselement 34 ein zweites Gewinde 38 aufweist, während das erste Gehäuseteil 112 ein erstes Gegengewinde 116 und das zweite Gehäuseteil 114 ein zweites Gegengewinde 118 aufweist. Dabei ist bei bestimmungsgemäßer Anordnung des Filterelements 10 in dem Gehäuse 110 das erste Gewinde 36 mit dem ersten Gegengewinde 116 und das zweite Gewinde 38 mit dem zweiten Gegengewinde 118 verbunden.

Das erste Gewinde 36 ist als Außengewinde ausgebildet, während das zweite Gewinde 38 als Innengewinde ausgebildet ist. Das erste und zweite Gegengewinde 116, 118 sind komplementär dazu als Innengewinde bzw. als Außengewinde ausgebildet.

Zwischen der Verbindungsvorrichtung 30 und dem ersten Gehäuseteil 112 und dem zweiten Gehäuseteil 114, in Längsrichtung 80 an einem unteren Rand des ersten Gehäuseteils 112 und der Verbindungsvorrichtung 30 ist ein axial und radial dichtendes Dichtelement 120 angeordnet. Das Dichtelement 120 kann als Formdichtung, beispielsweise als Halbmond-Dichtung, ausgebildet sein. Mittels des Dichtelements 120 sind die beiden Gehäuseteile 112, 114 gegen die Umgebung gedichtet und das Filterelement 10 gegen die innere Gehäusewand des Gehäuses 110 gedichtet.

Das Fluid strömt von dem ersten Fluidanschluss 102 als Fluideinlass über die Außenseite des Filtermediumkörpers 12 als Rohfluidbereich 60 durch den Filtermediumkörper 12, durchströmt den Filtermediumkörper 12 in radialer Richtung von außen nach innen zum Reinfluidbereich 62, wird dabei gefiltert und kann dann durch den Auslassstutzen 108, welcher im ersten Gehäuseteil 112 angeordnet und gegen das Filterelement 10 in der zentralen Öffnung 48 der ersten Endscheibe 20 mit dem radialen Dichtelement 124, beispielsweise einem O-Ring, gedichtet ist, zum zweiten Fluidanschluss 104 als Fluidauslass. Das Dichtelement 124 ist, wie in Figur 2 erkennbar, auf einer radialen Innenseite der zentralen Öffnung der ersten Endscheibe 20 angeordnet.

In einem alternativen Ausführungsbeispiel kann die Strömungsrichtung des Fluids auch umgekehrt sein.

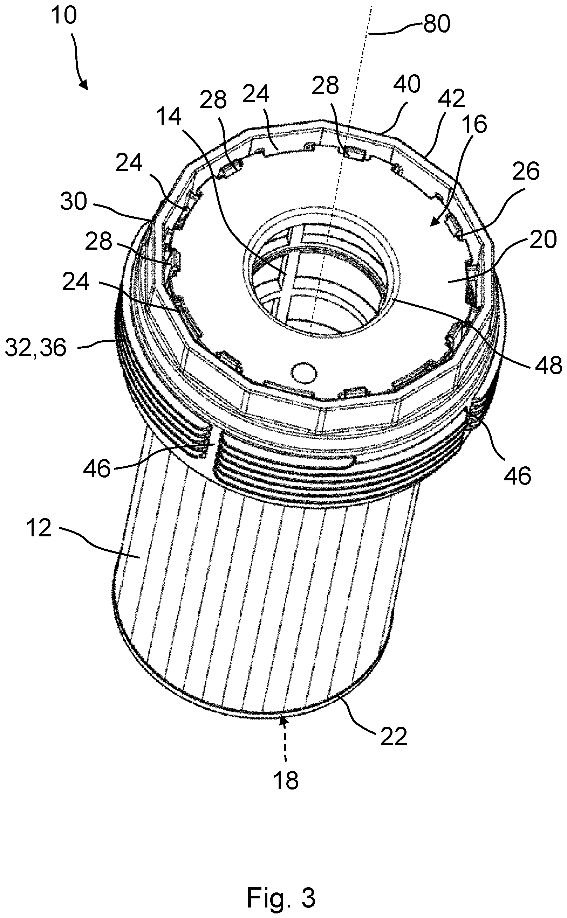

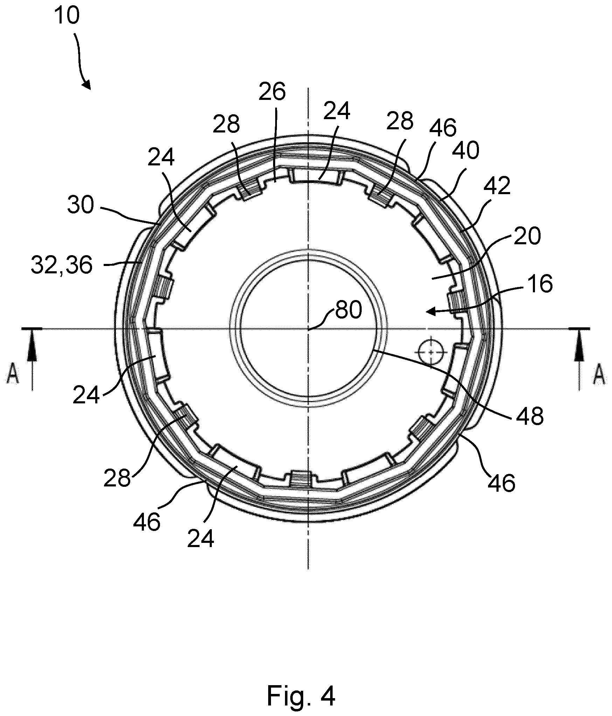

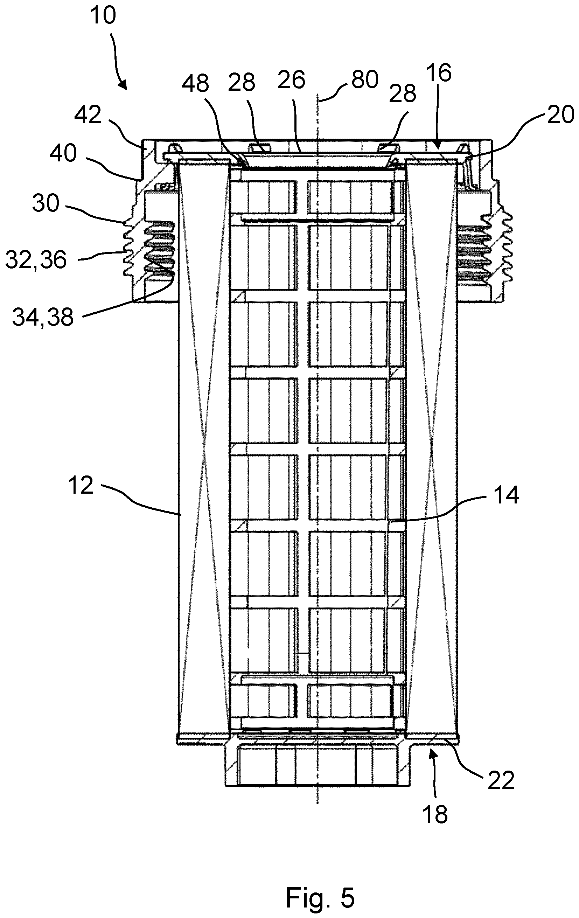

Figur 3 zeigt eine isometrische Darstellung des Filterelements 10 des Filtersystems 100, während in Figur 4 eine Draufsicht auf das Filterelement und in Figur 5 ein Längsschnitt durch das Filterelement 10 dargestellt ist.

In den Darstellungen der Figuren 3 bis 5 sind Details der Verbindungsvorrichtung 30 erkennbar. Das erste und zweite Verbindungselement 32, 34 ist an einem umlaufenden Randelement 40 angeordnet, welches mit der ersten Endscheibe 20 verbunden ist. Das Randelement 40 ist dabei von der ersten Endscheibe 20 axial beabstandet.

Das Randelement 40 umgibt den Filtermediumkörper 12 wenigstens bereichsweise. Insbesondere umgeben das erste und das zweite Gewinde 36, 38 in Richtung der Längsachse 80 einen Teil des Filtermediumkörpers 12.

Bei dem dargestellten Ausführungsbeispiel ist das Randelement 40 mit der ersten Endscheibe 20 über eine lösbare Verbindung 26 verbunden. Dazu weist das Randelement 40 einen in Längsrichtung 80 von dem Filtermediumkörper 12 weg weisenden Bund 42 auf, an dem auf seiner radialen Innenseite eine Reihe von Rastelementen 28 angeordnet sind. Mittels dieser Rastelemente 28 kann das Randelement 40 mit der Endscheibe 20 verklipst werden, so dass beide eine stabile Verbindung eingehen. Die Rastelemente 28 können beispielsweise für eine Verschnappung mit der Endscheibe 20 ausgebildet sein.

Die Rastelemente 28 können zur Sicherung des Randelements 40 an der Endscheibe 20 sowie als Positionierungshilfe für eine Positionierung entlang der Längsrichtung 80 dienen.

Wie in Figur 3 und 4 erkennbar, weist die erste Endscheibe 20 eine Mehrzahl von Fluidöffnungen 24 in Längsrichtung 80 zum Durchströmen des Fluids auf. Die Fluidöffnungen 24 sind radial außen an der Endscheibe 20 benachbart zu dem Randelement 40 angeordnet und insbesondere durch das Randelement 40 nach außen abgeschlossen. Vorteilhaft können so der Fluideinlass und der Fluidauslass in Längsrichtung 80 auf derselben Seite angeordnet sein. Das Rohfluid kann so im Gehäuse 110 des Filtersystems 100 durch die Fluidöffnungen 24 der Endscheibe 20 auf die radiale Außenseite des Filtermediumkörpers 12 fließen und so den Filtermediumkörper 12 in radialer Richtung von außen nach innen durchströmen und dabei gefiltert werden.

Wie in der isometrischen Darstellung in Figur 3 erkennbar, weist das erste Gewinde 36 jeweils in Längsrichtung 80 verlaufende, auf dem Umlauf verteilte, Aussparungen 46 auf, durch welche das Rohfluid auf die Außenseite des Filtermediumkörpers 12 fließen kann. Ähnlich angeordnete Aussparungen 46 weist das radial innen liegende zweite Gewinde 38 auf.

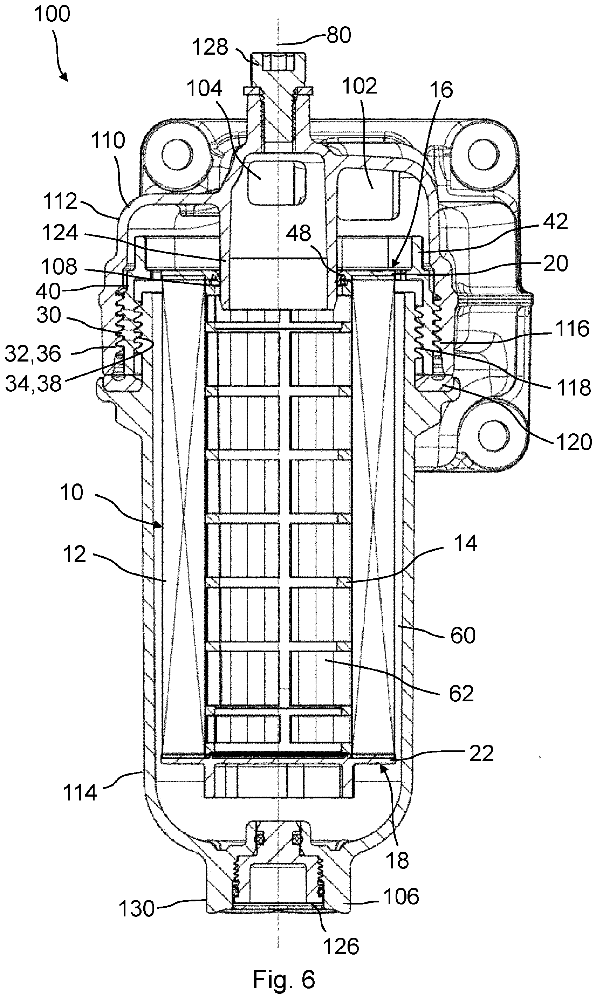

In Figuren 6 bis 21 sind weitere Ausführungsbeispiele eines Filtersystems 100 mit einem Filterelement 10 dargestellt. Um unnötige Wiederholungen zu vermeiden, wird jeweils nur auf die Unterschiede in den Ausführungen eingegangen.

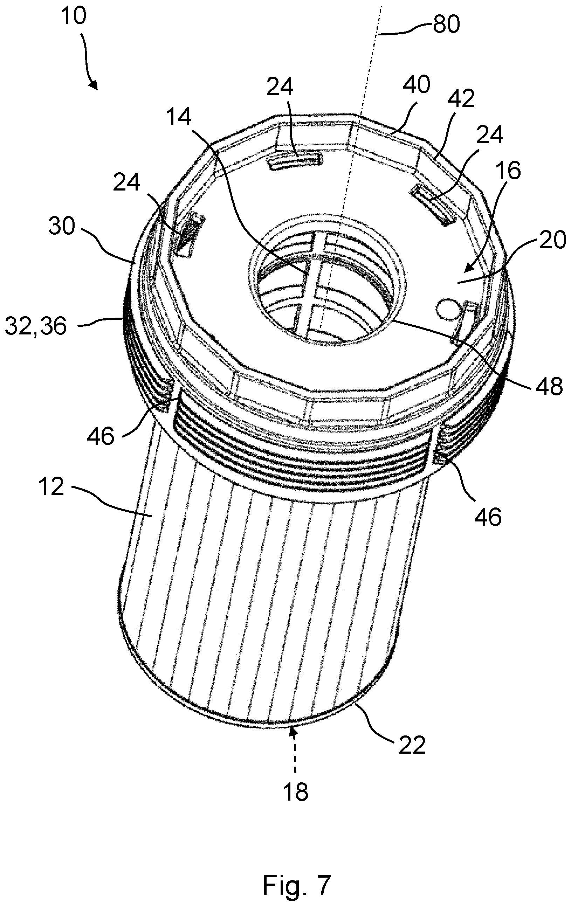

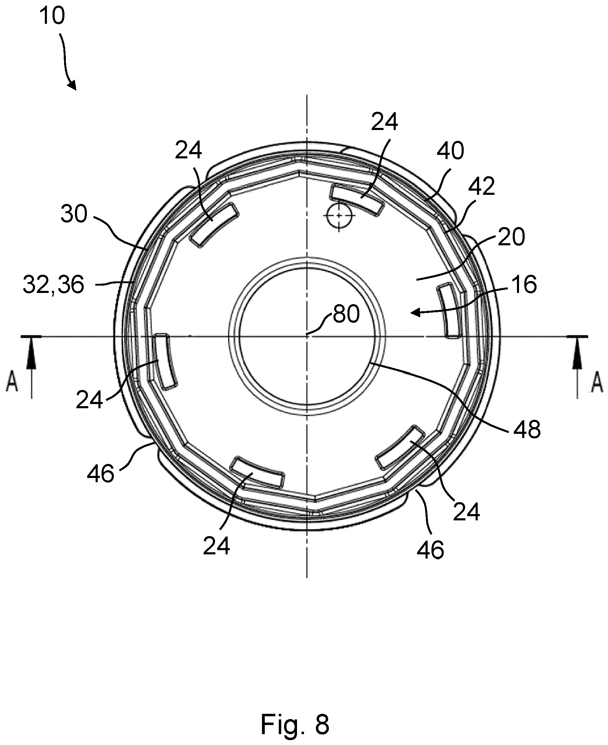

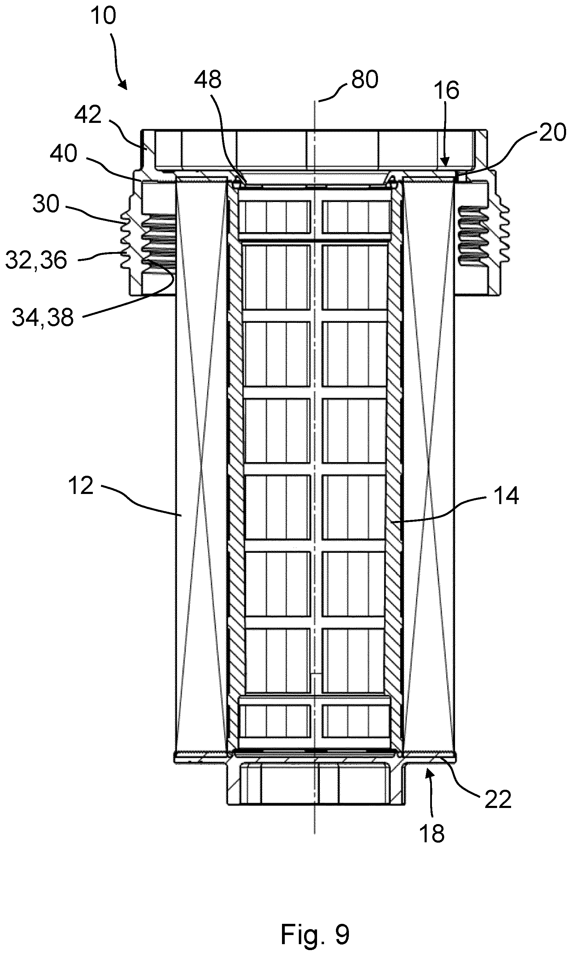

Figur 6 zeigt einen Längsschnitt durch ein Filtersystem 100 nach einem weiteren Ausführungsbeispiel der Erfindung. Figur 7 zeigt eine isometrische Darstellung eines Filterelements 10 des Filtersystems 100 nach Figur 6, während in Figur 8 eine Draufsicht auf das Filterelement 10 und in Figur 9 ein Längsschnitt durch das Filterelement 10 dargestellt ist.

Das in Figuren 6 bis 9 dargestellte Ausführungsbeispiel ist sehr ähnlich dem in Figuren 1 bis 5 dargestellten Ausführungsbeispiel.

Der Unterschied besteht darin, dass der Bund 40 des Randelements 40 in Längsrichtung 80 weiter von dem Filtermediumkörper 12 weg hochgezogen ist. Außerdem ist das Randelement 40 nicht lösbar mit der ersten Endscheibe 20 verbunden, sondern beispielsweise mit der Endscheibe 20 verschweißt oder verklebt. Alternativ können Endscheibe 20 und Randelement 40 auch einstückig ausgebildet sein.

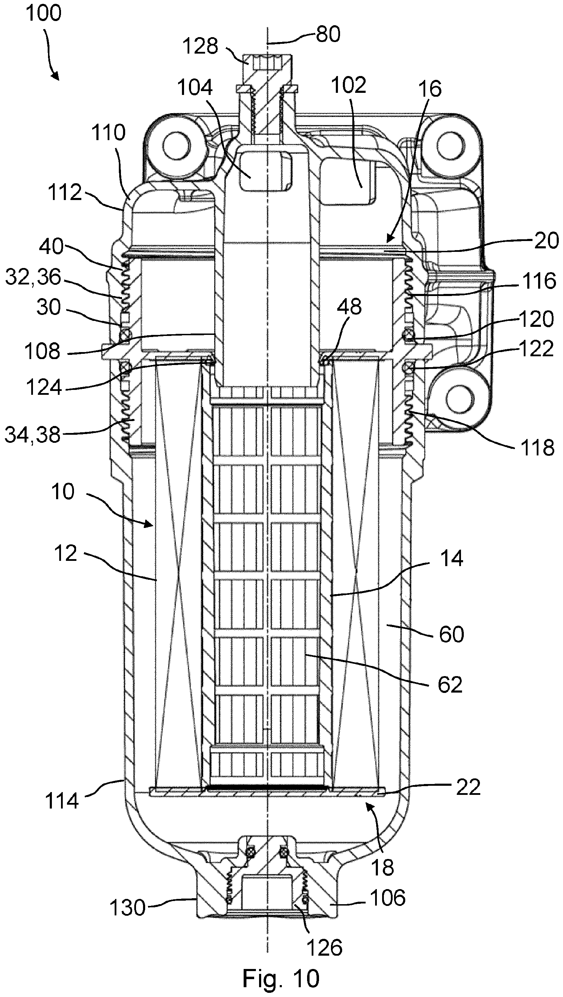

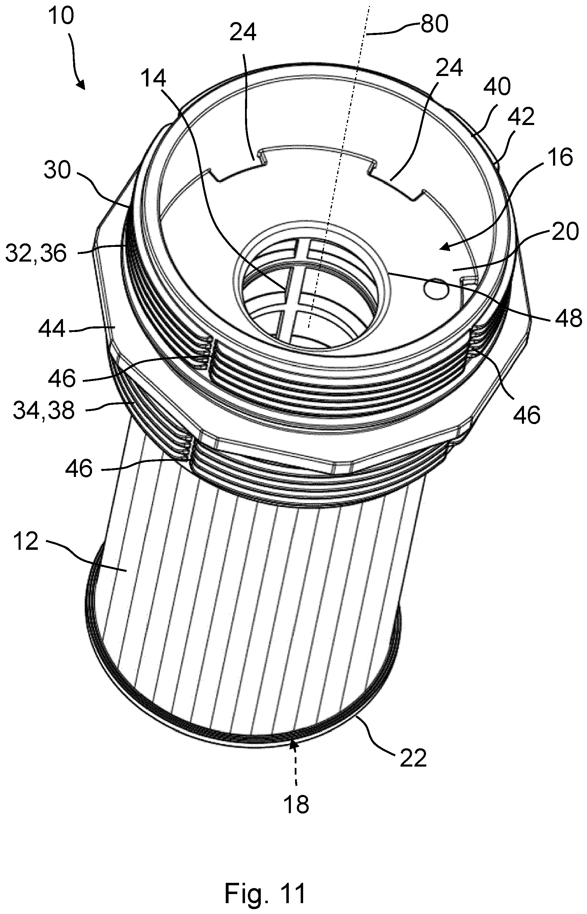

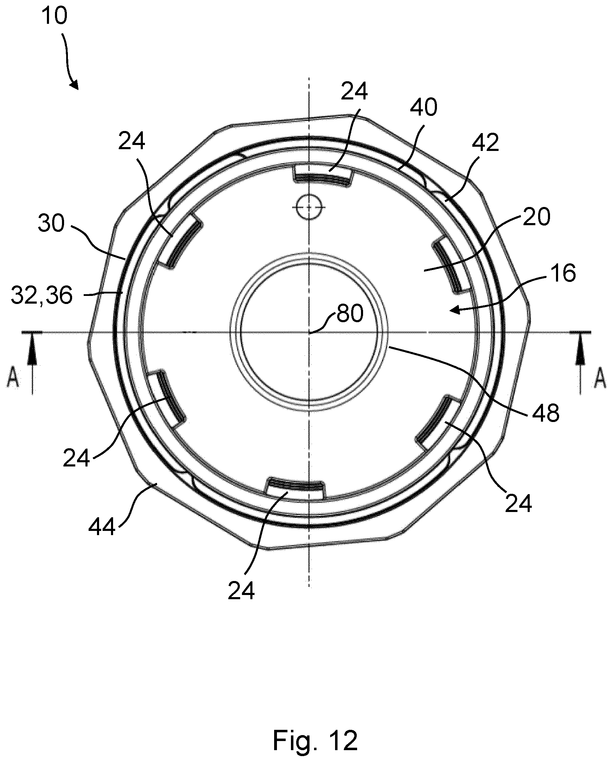

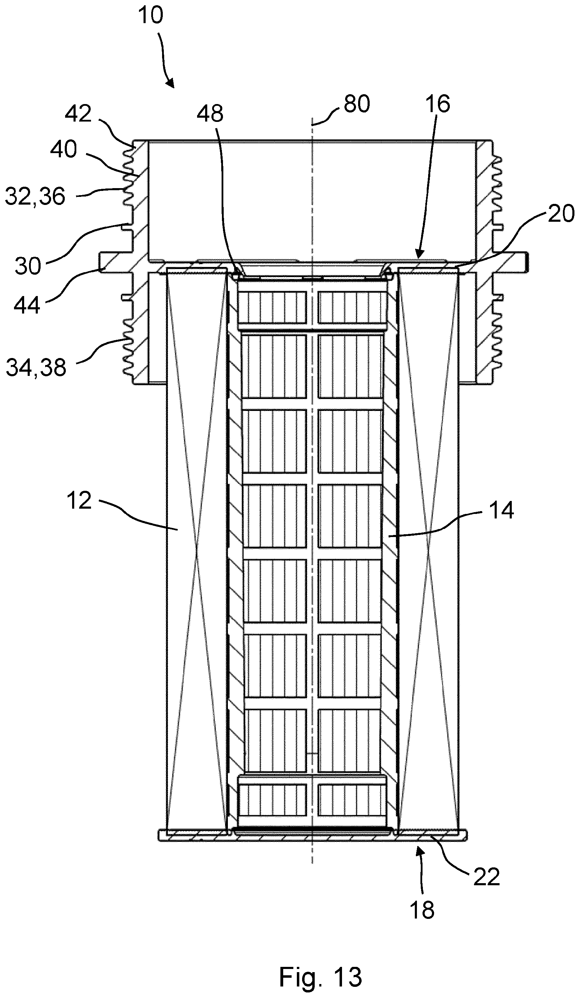

Figur 10 zeigt einen Längsschnitt durch ein Filtersystem 100 nach einem weiteren Ausführungsbeispiel der Erfindung. Figur 11 zeigt eine isometrische Darstellung eines Filterelements des Filtersystems nach Figur 10, während in Figur 12 eine Draufsicht auf das Filterelement 10 und in Figur 13 ein Längsschnitt durch das Filterelement 10 dargestellt ist.

Bei diesem Ausführungsbeispiel sind das erste und das zweite Gewinde 36, 38 als Außengewinde, ausgebildet. Dies wird ermöglicht durch den in Längsrichtung 80 verlängerten Bund 42 des Randelements 40. Das erste und zweite Gegengewinde 116, 118 des ersten und zweiten Gehäuseteils 112, 114 sind deshalb als Innengewinde ausgebildet.

Das Randelement 40 weist einen radial nach außen weisenden umlaufenden Vorsprung 44 auf. Dabei sind das erste Verbindungselement 32 und das zweite Verbindungselement 34 in Längsrichtung 80 beidseits des Vorsprungs 44 angeordnet.

Das erste Gehäuseteil 112 wird so in Längsrichtung 80 von oben bis zu dem Vorsprung 44 an die Verbindungsvorrichtung 30 aufgeschraubt, während das zweite Gehäuseteil 114 in Längsrichtung 80 von unten bis zu dem Vorsprung 44 an die Verbindungsvorrichtung 30 aufgeschraubt wird. Die beiden Gehäuseteile 112, 114 sind mit Dichtelementen 120, 122, beispielsweise O-Ringen, gegen die Verbindungsvorrichtung 30 gedichtet.

Das die Verbindungsvorrichtung 30 aufweisende Randelement 40 ist dabei unlösbar mit der ersten Endscheibe 20, beispielsweise über Verschweißen oder Verkleben, verbunden.

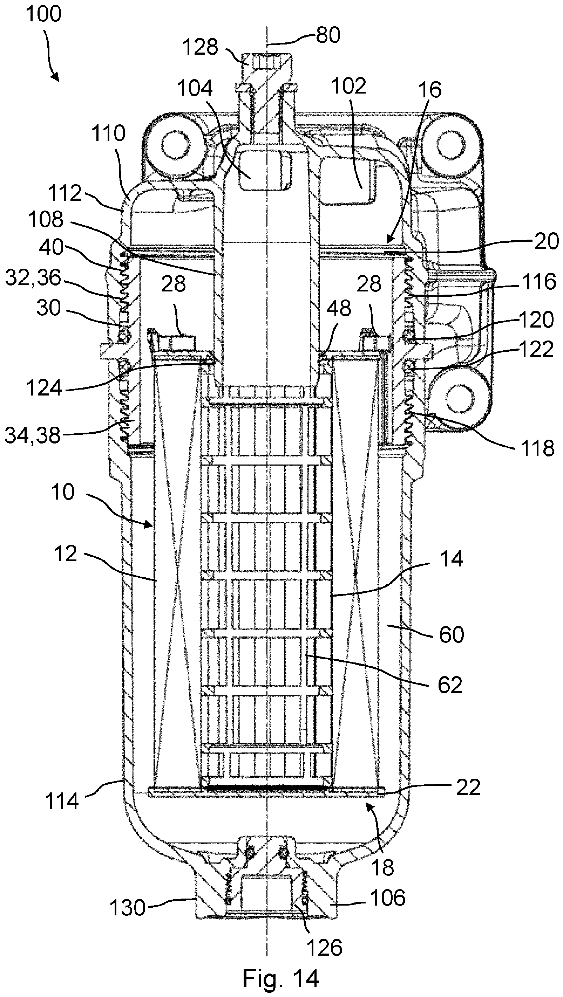

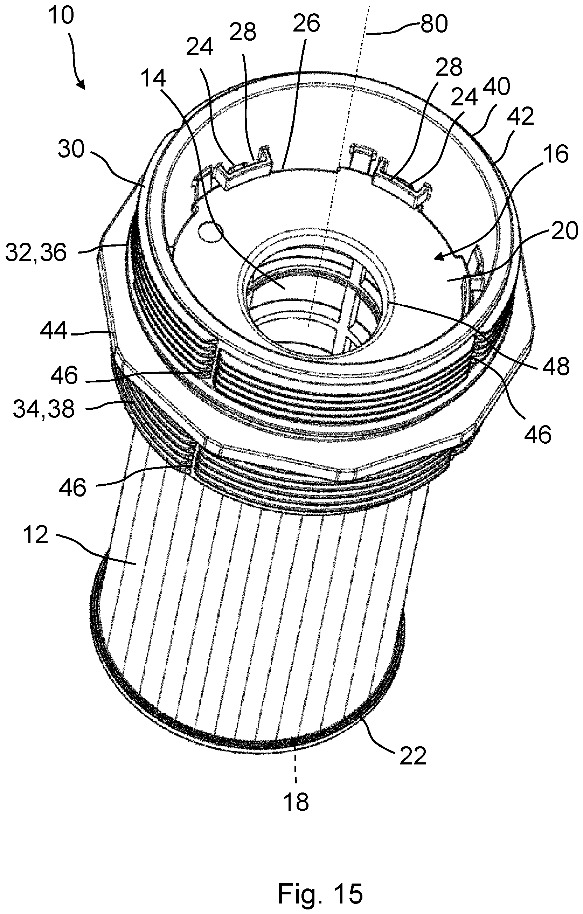

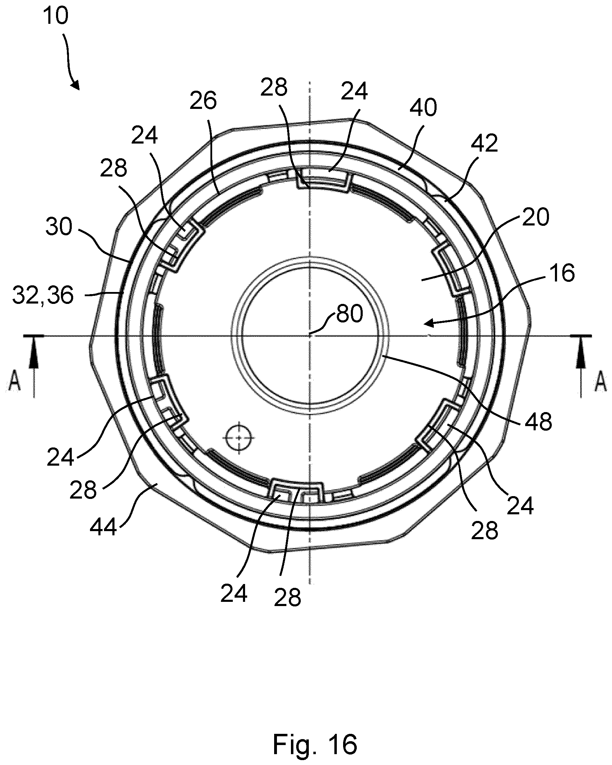

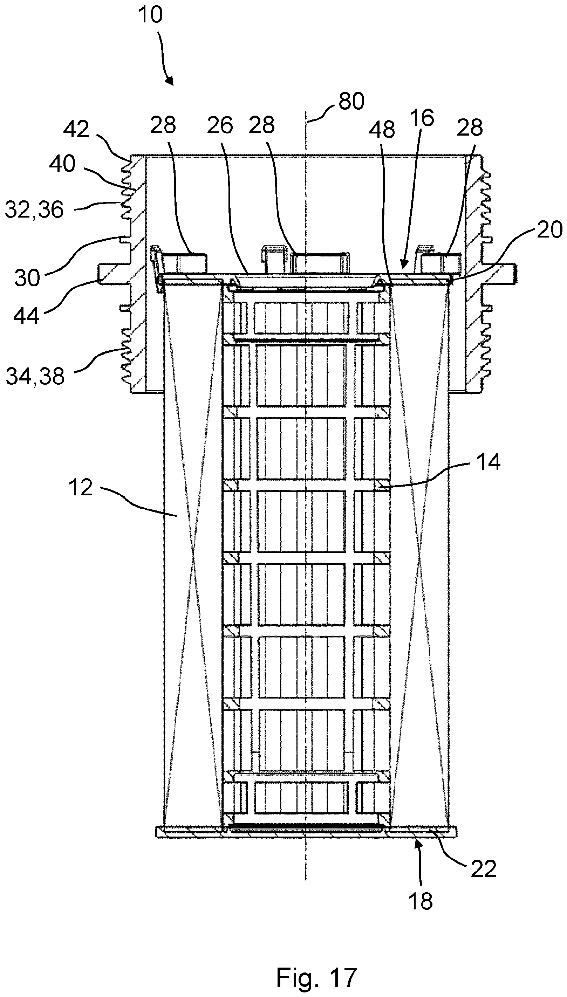

Figur 14 zeigt einen Längsschnitt durch ein Filtersystem 100 nach einem weiteren Ausführungsbeispiel der Erfindung. Figur 15 zeigt eine isometrische Darstellung eines Filterelements 10 des Filtersystems 10, während in Figur 16 eine Draufsicht auf das Filterelement 10 und in Figur 17 ein Längsschnitt durch das Filterelement 10 dargestellt ist.

Das in Figuren 14 bis 17 dargestellte Ausführungsbeispiel ist sehr ähnlich dem in Figuren 10 bis 13 dargestellten Ausführungsbeispiel.

Der Unterschied besteht darin, dass das Randelement 40 bei diesem Ausführungsbeispiel mittels einer lösbaren Verbindung 26 mit der ersten Endscheibe 20 verbunden ist. Dazu weist das Randelement 40 auf der radialen Innenseite des in Längsrichtung 80 von dem Filtermediumkörper 12 weg weisenden Bundes 42 eine Reihe von Rastelementen 28 auf. Mittels dieser Rastelemente 28 kann das Randelement 40 mit der Endscheibe 20 verklipst werden, so dass beide eine stabile Verbindung eingehen. Die Rastelemente 28 können beispielsweise für eine Verschnappung mit der Endscheibe 20 ausgebildet sein.

Die Rastelemente 28 können zur Sicherung des Randelements 40 an der Endscheibe 20 sowie als Positionierungshilfe für eine Positionierung entlang der Längsrichtung 80 dienen.

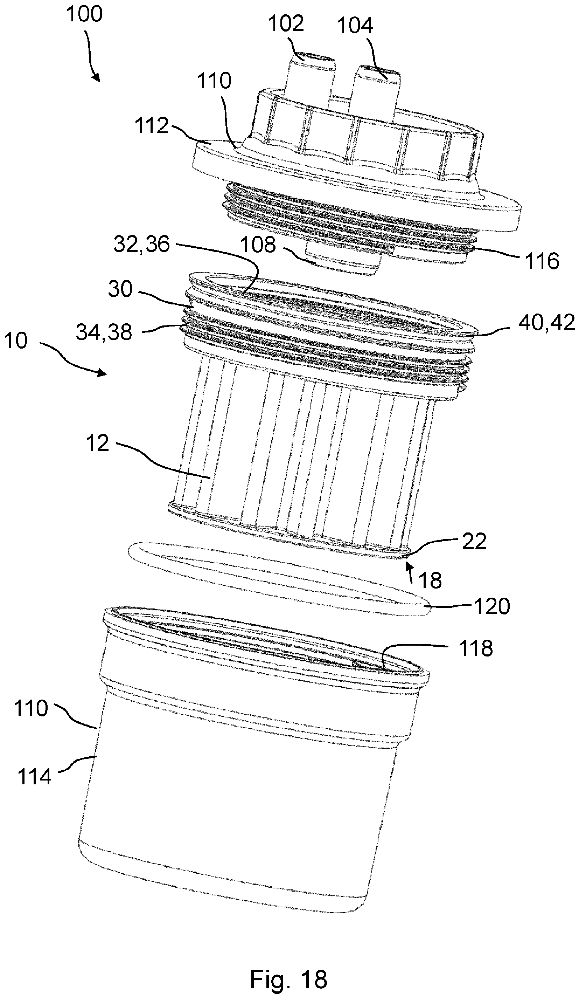

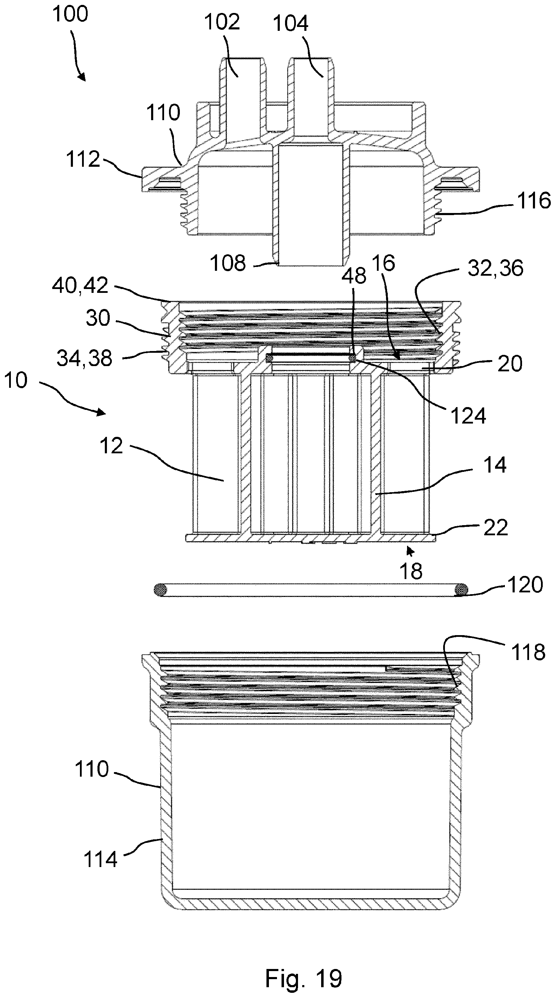

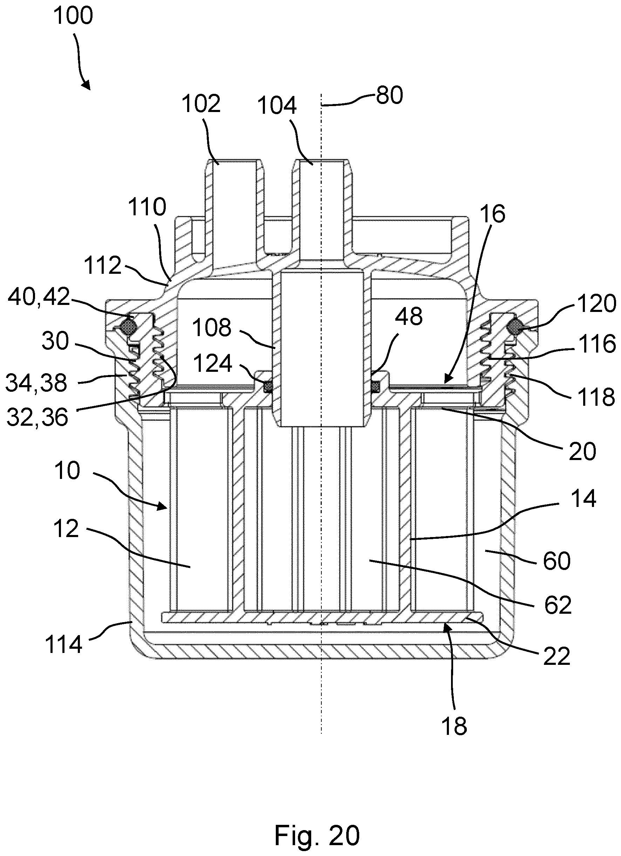

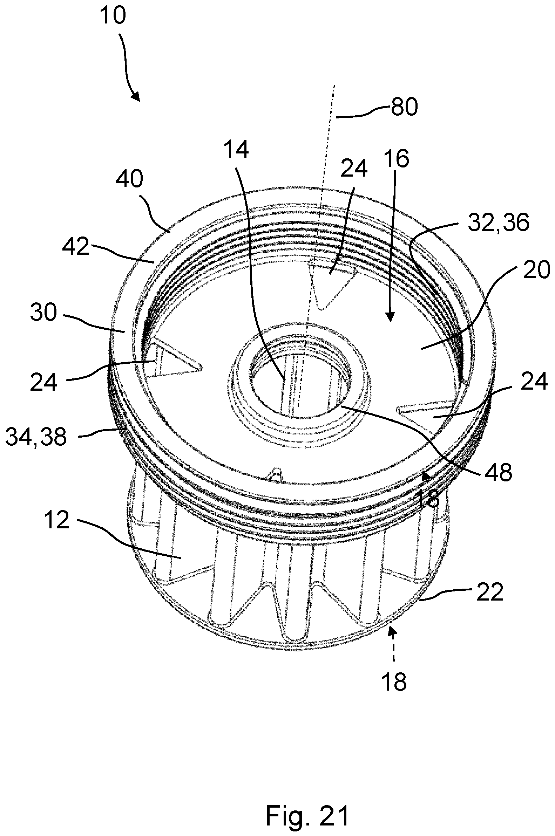

Figur 18 zeigt eine Explosionsdarstellung eines Filtersystems 100 nach einem weiteren Ausführungsbeispiel der Erfindung in isometrischer Darstellung, während in Figur 19 eine Explosionsdarstellung des Filtersystems 100 im Längsschnitt dargestellt ist. Figur 20 zeigt einen Längsschnitt durch das Filtersystem 100. In Figur 21 ist eine isometrische Darstellung eines Filterelements 10 des Filtersystems 100 gezeigt.

Dieses Ausführungsbeispiel stellt ein in Längsrichtung 80 sehr kompaktes Filtersystem 100 dar. Das als Verbindungsvorrichtung 30 ausgebildete Randelement 40 ist als in Längsrichtung 80 von dem Filtermediumkörper 12 weg weisender Bund 42 ausgebildet.

Dabei trägt das Randelement 40 als erstes Verbindungselement 32 ein Innengewinde und auf seiner Außenseite als zweites Verbindungselement 34 ein Außengewinde. Entsprechend ist das am ersten Gehäuseteil 112 angeordnete erste Gegengewinde 116 ein Außengewinde und das am zweiten Gehäuseteil 114 angeordnete zweite Gegengewinde 118 ein Innengewinde.

Im bestimmungsgemäß montierten Zustand des Filtersystems 100 ist die Verbindungsvorrichtung 30 auf ihrer radialen Außenseite mit einem Dichtelement 120, beispielsweise einem O-Ring, gegen die Innenseite des ersten Gehäuseteils 112 gedichtet.

Das Randelement 40 ist bei diesem Ausführungsbeispiel mit der ersten Endscheibe 20 einstückig ausgebildet.

Wie insbesondere in Figur 21 erkennbar, weist die erste Endscheibe 20 dreieckförmig verlaufende Fluidöffnungen 24 zur Durchströmung mit dem Fluid auf, welche einem Querschnitt des Filtermediumkörpers 12 entsprechend ausgebildet sind. Der Filtermediumkörper 12 ist im Querschnitt sternförmig ausgebildet, so dass das durch die Fluidöffnungen 24 strömende Fluid so auf die radiale Außenseite des Filtermediumkörpers 12 gelangt.

Nach einem weiteren, nicht dargestellten, Ausführungsbeispiel kann das Filtersystem 100 ein Ionentauscher-Filtersystem sein. Dabei kann der Filtermediumkörper 12 des Filterelements 10 als Ionentauscher ausgebildet sein.

### Bezugszeichen

- 10: Filterelement
- 12: Filtermediumkörper
- 14: Stützrohr
- 16: erste Stirnseite
- 18: zweite Stirnseite
- 20: erste Endscheibe
- 22: zweite Endscheibe
- 24: Fluidöffnung
- 26: lösbare Verbindung
- 28: Rastelement
- 30: Verbindungsvorrichtung
- 32: Verbindungselement
- 34: Verbindungselement
- 36: erstes Gewinde
- 38: zweites Gewinde
- 40: Randelement
- 42: Bund
- 44: Vorsprung
- 46: Aussparung
- 48: zentrale Öffnung
- 60: Rohfluidbereich
- 62: Reinfluidbereich
- 80: Längsachse
- 100: Filtersystem
- 102: erster Fluidanschluss
- 104: zweiter Fluidanschluss
- 106: Fluidablassbohrung
- 108: Auslassstutzen
- 110: Gehäuse
- 112: erstes Gehäuseteil
- 114: zweites Gehäuseteil
- 116: erstes Gegengewinde
- 118: zweites Gegengewinde
- 120: Dichtelement
- 122: Dichtelement
- 124: Dichtelement
- 126: Verschlusselement
- 128: Entlüftungsschraube
- 130: Werkzeugansatz
- 132: Dichtelement

## Patentansprüche

1. Filterelement (10) für ein Fluid, insbesondere für eine Flüssigkeit, insbesondere Öl oder Kraftstoff oder Kühlmittel, zum Einbau in ein Gehäuse (110) eines Filtersystems (100) mit wenigstens einem ersten Gehäuseteil (112) und einem zweiten Gehäuseteil (114), wenigstens umfassend einen Filtermediumkörper (12), welcher wenigstens an einer ersten Stirnseite (16) eine erste Endscheibe (20) aufweist, und eine Verbindungsvorrichtung (30) zum Fixieren des Filterelements (10) in dem Gehäuse (110) sowie zum Verschließen des Gehäuses (110),
wobei die Verbindungsvorrichtung (30) wenigstens ein erstes Verbindungselement (32) zum Zusammenwirken mit dem ersten Gehäuseteil (112) und wenigstens ein zweites Verbindungselement (34) zum Zusammenwirken mit dem zweiten Gehäuseteil (114) aufweist,
wobei das erste und zweite Verbindungselement (32, 34) an einem umlaufenden Randelement (40) angeordnet sind, welches mit der ersten Endscheibe (20) verbunden ist und welches von der ersten Endscheibe (20) axial beabstandet ist.

2. Filterelement nach Anspruch 1, wobei die erste Endscheibe (20) wenigstens eine Fluidöffnung (24) in Längsrichtung (80) zum Durchströmen des Fluids aufweist.

3. Filterelement nach Anspruch 2, wobei die wenigstens eine Fluidöffnung (24) radial außen an der Endscheibe (20) angeordnet ist,
insbesondere wobei die wenigstens eine Fluidöffnung (24) benachbart zu dem Randelement (40) angeordnet ist,
insbesondere wobei die wenigstens eine Fluidöffnung (24) durch das Randelement (40) nach außen abgeschlossen ist.

4. Filterelement nach einem der vorhergehenden Ansprüche, wobei das erste Verbindungselement (32) ein erstes Gewinde (36) und das zweite Verbindungselement (34) ein zweites Gewinde (38) aufweist, welche zum Zusammenwirken mit einem ersten Gegengewinde (116) des ersten Gehäuseteils (112) und einem zweiten Gegengewinde (118) des zweiten Gehäuseteils (114) ausgebildet sind.

5. Filterelement nach Anspruch 4, wobei das eine der beiden Gewinde (36, 38) als Innengewinde und das andere der beiden Gewinde (36, 38) als Außengewinde ausgebildet ist, oder das erste und das zweite Gewinde (36, 38) als Außengewinde, ausgebildet sind.

6. Filterelement nach Anspruch 4 oder 5, wobei die beiden Gewinde (36, 38) jeweils wenigstens eine in Längsrichtung (80) verlaufende Aussparung (46) aufweisen.

7. Filterelement nach einem der vorhergehenden Ansprüche, wobei das Randelement (40) den Filtermediumkörper (12) wenigstens bereichsweise umgibt, insbesondere wobei das erste und/oder das zweite Gewinde (36, 38) in Richtung der Längsachse (80) einen Teil des Filtermediumkörpers (12) umgeben.

8. Filterelement nach einem der vorhergehenden Ansprüche, wobei das Randelement (40) einen in Längsrichtung (80) von dem Filtermediumkörper (12) weg weisenden Bund (42) aufweist.

9. Filterelement nach einem der vorhergehenden Ansprüche, wobei das Randelement (40) einen radial nach außen weisenden umlaufenden Vorsprung (44) aufweist, wobei das erste Verbindungselement (32) und das zweite Verbindungselement (34) in Längsrichtung (80) beidseits des Vorsprungs (44) angeordnet sind.

10. Filterelement nach einem der vorhergehenden Ansprüche, wobei das Randelement (40) mit der wenigstens einen Endscheibe (20) über eine lösbare Verbindung (26), insbesondere mit wenigstens einem Rastelement (28), verbunden ist.

11. Filterelement nach einem der Ansprüche 1 bis 9, wobei das Randelement (40) mit der wenigstens einen Endscheibe (20) einstückig ausgebildet ist.

12. Ionentauscher-Filterelement mit einem Filterelement (10) nach einem der vorhergehenden Ansprüche, wobei ein Filtermediumkörper (12) des Filterelements (10) als Ionentauscher ausgebildet ist.

13. Filtersystem (100) für ein Fluid, insbesondere für eine Flüssigkeit, insbesondere Öl oder Kraftstoff oder Kühlmittel, mit einem Gehäuse (110) mit einem ersten Fluidanschluss (102) und einem zweiten Fluidanschluss (104) und einem in dem Gehäuse (110) angeordneten Filterelement (10) nach einem der Ansprüche 1 bis 11,
wobei das Gehäuse (110) wenigstens ein erstes Gehäuseteil (112) und ein zweites Gehäuseteil (114) umfasst, welche in Richtung einer Längsachse (80) aufeinander folgen und miteinander verbunden sind,
wobei das Filterelement (10) einen Filtermediumkörper (12), welcher wenigstens an einer ersten Stirnseite (16) eine erste Endscheibe (20) aufweist, und eine Verbindungsvorrichtung (30) zum Fixieren des Filterelements (10) in dem Gehäuse (110) sowie zum Verschließen des Gehäuses (110) umfasst,
wobei die Verbindungsvorrichtung (30) wenigstens ein erstes Verbindungselement (32) und wenigstens ein zweites Verbindungselement (34) aufweist,
wobei bei bestimmungsgemäßer Anordnung des Filterelements (10) in dem Gehäuse (110) das erste Verbindungselement (32) mit dem ersten Gehäuseteil (112) und das zweite Verbindungselement (34) mit dem zweiten Gehäuseteil (114) verbunden ist.

14. Filtersystem nach Anspruch 13, wobei das erste Verbindungselement (32) ein erstes Gewinde (36) und das zweite Verbindungselement (34) ein zweites Gewinde (38) aufweist, wobei das erste Gehäuseteil (112) ein erstes Gegengewinde (116) und das zweite Gehäuseteil (114) ein zweites Gegengewinde (118) aufweist,
wobei bei bestimmungsgemäßer Anordnung des Filterelements (10) in dem Gehäuse (110) das erste Gewinde (36) mit dem ersten Gegengewinde (116) und das zweite Gewinde (38) mit dem zweiten Gegengewinde (118) verbunden sind.

15. Filtersystem nach Anspruch 13 oder 14, wobei zwischen der Verbindungsvorrichtung (30) und dem ersten Gehäuseteil (112) und/oder dem zweiten Gehäuseteil (114) wenigstens ein axial und/oder radial dichtendes Dichtelement (120, 122) angeordnet ist.
